# EUROPÄISCHE PATENTSCHRIFT

(11) **EP 3 246 118 B1**
(45) Veröffentlichungstag und Bekanntmachung des Hinweises auf die Patenterteilung: **01.07.2020**
(21) Anmeldenummer: 17168321.2
(22) Anmeldetag: 27.04.2017
(51) Int. Cl.: B23B 29/20, B23B 29/24, B23B 31/02, F16B 3/06

(54) **WERKZEUGTRÄGER**
TOOL CARRIER
PORTE-OUTIL

(30) Priorität: 20.05.2016 DE 102016109275
(43) Veröffentlichungstag der Anmeldung: 22.11.2017
(73) Patentinhaber: Ott-Jakob Spanntechnik GmbH, 87663 Lengenwang (DE)
(72) Erfinder: Greif, Josef, 87496 Friesenried (DE); Rösch, Conrad, 87459 Pfronten (DE)
(74) Vertreter: Charrier Rapp & Liebau

(56) Entgegenhaltungen:
- DE-A1- 19 961 451
- DE-A1-102007 036 144
- DE-A1-102012 107 331
- DE-A1-102013 110 043
- DE-A1-102014 102 082
- DE-C- 495 583

## Beschreibung

Die Erfindung betrifft einen Werkzeugträger nach dem Oberbegriff des Patentanspruchs 1.

Ein derartiger Werkzeugträger ist aus der DE 10 2014 102 082 A1 bekannt. Dieser weist einen z.B. als Revolverkörper ausgebildeten Grundkörper mit mehreren radialen Aufnahmeöffnungen zum Einsatz unterschiedlicher Werkzeugaufnahmen auf. Zur genauen Orientierung der Werkzeugaufnahmen und zur Drehmomentabstützung sind in die Aufnahmeöffnungen des Grundkörpers mit einer speziellen Innenkontur versehene, ringförmige Aufnahmen eingesetzt. Diese Aufnahmen sind entweder mit Hilfe einer thermischen Behandlung eingeschrumpft oder sie sind als Flanschaufnahmen ausgeführt und über Schrauben an dem Grundkörper befestigt. Diese Art der Befestigung erfordert jedoch eine aufwändige Montage und auch die erforderliche Ausrichtung ist mit einem erheblichen Aufwand verbunden.

Aufgabe der Erfindung ist es, einen Werkzeugträger der eingangs genannten Art zu schaffen, der eine einfache und genaue Montage einer zur Positionierung und Drehmomentstütze dienenden Aufnahme ermöglicht.

Diese Aufgabe wird durch einen Werkzeugträger mit den Merkmalen des Anspruchs 1 gelöst. Zweckmäßige Weiterbildungen und vorteilhafte Ausgestaltungen der Erfindung sind in den Unteransprüchen angegeben.

Bei dem erfindungsgemäßen Werkzeugträger wird die mit einer Innenkontur zur Positionierung und Drehmomentabstützung der Werkzeugaufnahme versehene Aufnahme durch einen zur Aufnahmeöffnung des Grundkörpers konzentrischen Klemmring innerhalb des Grundkörpers fixiert. Durch den Klemmring wird eine kraftschlüssige Halterung der Aufnahme innerhalb der Aufnahmeöffnung des Grundkörpers ermöglicht. Die ringförmige Aufnahme ist in einen entsprechenden Bereich der Aufnahmeöffnung eingesetzt, ausgerichtet und durch den Klemmring in einer gewünschten Position fixiert. Es sind keine Wärmebehandlungen oder aufwändige Montagearbeiten erforderlich. Der Klemmring weist eine kegelförmige Innenkontur zur Anlage an einer entsprechenden kegelförmigen Außenfläche der Aufnahme auf. Dadurch kann eine sichere und zentrierte Halterung der Aufnahme erreicht werden. Der Klemmring weist außerdem einen zylindrischen Außensitz zur Anlage an einer zylindrischen Innenwand in einem oberen Bereich der abgestuften Aufnahmeöffnung auf.

Die kegelförmige Innenkontur des Klemmrings und die kegelförmige Außenfläche der Aufnahme weisen in ein vorteilhaften Ausführung dasselbe Kegelverhältnis von vorzugsweise 1:10 auf.

Der Klemmring kann in vorteilhafter Weise mit einer reibungserhöhenden Beschichtung, z.B. einer Nickel-Diamant-Beschichtung, versehen sein. Dadurch kann eine kraftschlüssige Verbindung mit einer hohen Reibung erreicht werden.

Die Aufnahme ist ringförmig ausgebildet und weist zweckmäßigerweise eine Innenkontur in Form eines Polygons auf. Vorzugsweise ist die Innenkontur der Aufnahme in Form eines kegeligen Innenpolygons ausgeführt. Dadurch ist eine sehr genaue und besonders sichere Halterung einer Werkzeugaufnahme erreichbar. Die Aufnahme kann neben ihrer kegelförmigen Außenfläche auch eine zylindrische Außenfläche zur Anlage an einer zylindrischen Innenwand in einem mittleren Bereich der abgestuften Aufnahmeöffnung enthalten. Die Aufnahme kann aber auch eine andere Form aufweisen. Dadurch kann der Werkzeugträger einfach an unterschiedliche Werkzeugaufnahmen angepasst werden.

Die in den Grundkörper integrierte Spannvorrichtung enthält zwei durch ein gemeinsames Betätigungselement quer zu einer Mittelachse der Aufnahmeöffnung gegeneinander verschiebbare Spannelemente. Dadurch kann eine Werkzeugaufnahme gleichmäßiger gespannt werden. Selbst bei ungenauen Werkzeugaufnahmen oder Verschmutzungen kann eine möglichst genaue zentrische Spannung erreicht werden. Unerwünschte Kippbewegungen oder Schrägstellungen der Werkzeugaufnahmen sind außerdem vermeidbar. Die in entgegengesetzte Richtung erfolgende Verschiebung der beiden Spannelemente erfolgt durch ein gemeinsames Betätigungselement, wodurch eine einfache Bedienung ermöglicht wird. Die Spannvorrichtung kann auch besonders einfach montiert werden. Sie kann z.B. von oben in die Aufnahmeöffnungen der Revolverkörper eingesetzt und von außen montiert werden. Es sind keine aufwändigen Änderungen oder Anpassungen an dem Revolverkörper erforderlich.

Die beiden Spannelemente sind vorzugsweise derart ausgebildet, dass sie einen Spannzapfen der Werkzeugaufnahme von zwei Seiten umschließen. In einer besonders für angetriebene Werkzeuge geeigneten Ausführung kann das eine Spannelement in Form eines durch das Betätigungselement verschiebbaren Rings und das andere Spannelement in Form eines demgegenüber verschiebbaren Ringsegments ausgebildet sein. Durch das ringförmige Spannelement kann so ein Antrieb für die angetrieben Werkzeuge geführt werden. Für nicht angetriebene Werkzeuge können die Spannelemente aber auch als Schieber oder dgl. ausgeführt sein.

In einer besonders zweckmäßigen Ausgestaltung kann der Werkzeugträger als Werkzeugrevolver mit einem ring- oder scheibenförmigen Grundkörper ausgeführt sein, der über den Umfang verteilte Aufnahmeöffnungen mit darin angeordneten Aufnahmen enthält. Der Werkzeugträger kann aber auch eine andere geeignete Bauform aufweisen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: einen Querschnitt durch einen Teil eines Werkzeugträgers mit einer Werkzeugaufnahme und einer Spannvorrichtung in einer Lösestellung;
- **Figur 2**: eine Schnittansicht entlang der Linie A-A von Figur 1;
- **Figur 3**: einen Werkzeugträger mit einer ringförmigen Aufnahme und einem Klemmring vor der Montage;
- **Figur 4**: einen Werkzeugträger mit einer ringförmigen Aufnahme und einem Klemmring nach der Montage und
- **Figur 5**: den Werkzeugträger mit der ringförmigen Aufnahme und dem Klemmring von Figur 3 in einer Draufsicht.

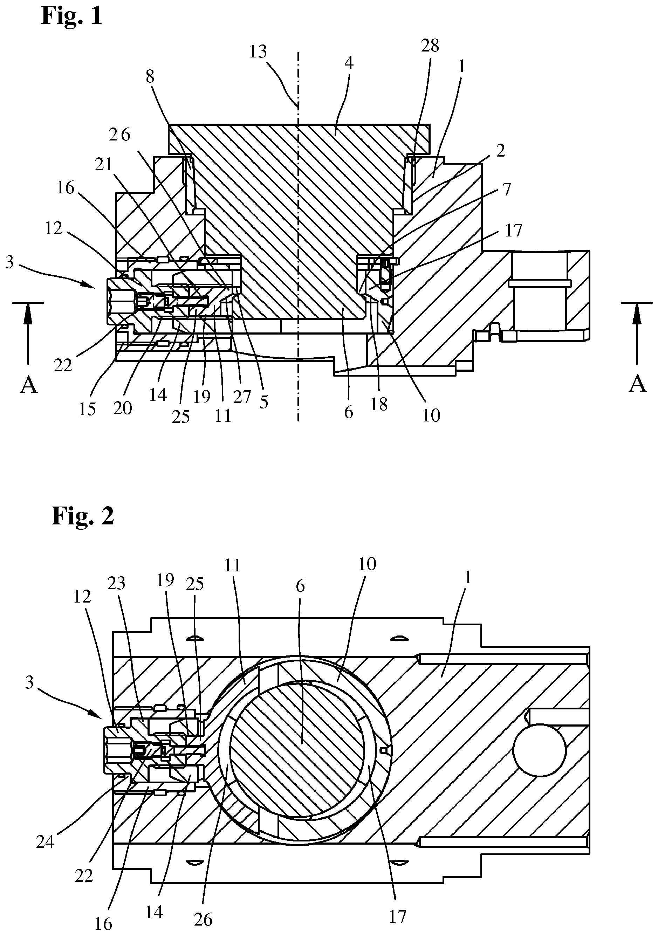

In den Figuren 1 und 2 ist ein Teil eines als Werkzeugrevolver ausgebildeten Werkzeugträgers mit einem hier scheibenförmigen Grundkörper 1, einer im Grundkörper 1 angeordneten Aufnahmeöffnung 2 und einer im Grundkörper 1 angeordneten Spannvorrichtung 3 zur Spannen einer in die Aufnahmeöffnung 2 eingesetzten Werkzeugaufnahme 4 in einem Querschnitt und einer Schnittansicht gezeigt. Der scheibenförmige Grundkörper 1 weist in an sich bekannter Weise mehrere an dessen Außenumfang sternförmig verteilte und mit einer Einheitskontur versehene Aufnahmeöffnungen 2 zur Halterung mehrerer Werkzeugaufnahmen 4 auf. Der hier als Sternrevolver ausgebildete Werkzeugträger kann aber auch als Scheibenrevolver mit an der Stirnseite eines Grundkörpers angeordneten Aufnahmeöffnungen, als Kopfrevolver, als Kronenrevolver oder auf andere geeignete Weise ausgeführt sein.

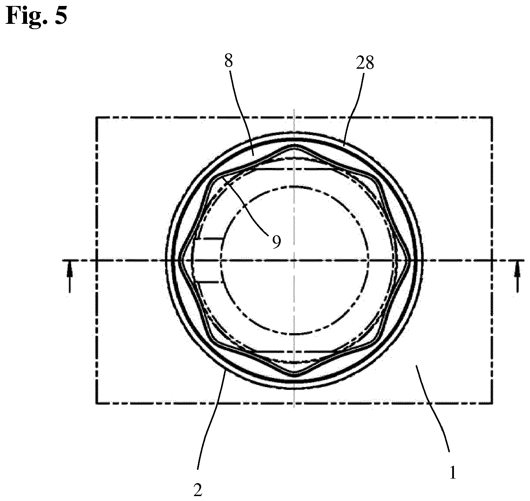

Die Aufnahmeöffnung 2 des Revolverkörpers 1 ist bei der gezeigten Ausführung mehrfach abgestuft und die Werkzeugaufnahme 4 weist einen in einen unteren Bereich 5 der Aufnahmeöffnung 2 ragenden unteren Spannzapfen 6 mit einer konischen oberen Spannfläche 7 auf. Der Spannzapfen 6 greift in den unteren Bereich 5 der Aufnahmeöffnung 2 mit einem radialen Abstand ein. In die Aufnahmeöffnung 2 des Grundkörpers 1 ist eine ringförmige Aufnahme 8 eingesetzt, die eine hier als Polygon ausgebildete und in Figur 5 erkennbare Innenkontur 9 enthält. Selbstverständlich sind in die Aufnahmeöffnung 2 auch andere Aufnahmen 8 mit anderen Innenkonturen für unterschiedlich gestaltete Werkzeugaufnahmen einsetzbar.

Die Spannvorrichtung 3 umfasst zwei gegeneinander verschiebbare Spannelemente 10 und 11, die durch ein gemeinsames Betätigungselement 12 in entgegen gesetzten Richtungen quer zu einer Mittelachse 13 der Aufnahmeöffnung 2 verschiebbar und zum beidseitigen Umgreifen des Spannzapfens 6 ausgebildet sind. Durch das hier als Gewindebolzen ausgebildete Betätigungselement 12 können die beiden an gegenüberliegenden Seiten des Spannzapfens 6 angreifenden Spannelemente 10 und 11 aus einer in den Figuren 1 und 2 gezeigten Lösestellung in Richtung der Mittelachse 13 aufeinander zu in eine Spannstellung verschoben bzw. aus dieser Spannstellung durch Auseinanderfahren der Spannelemente 10 und 11 wieder in die Lösestellung bewegt werden.

Das erste Spannelement 10 ist in Form eines im inneren Teil 5 der Aufnahmeöffnung 2 angeordneten und quer zur Mittelachse 13 der Aufnahmeöffnung 2 verschiebbaren Rings mit einem seitlich vorstehenden Führungszapfen 14 ausgeführt. Der Führungszapfen 14 des ringförmigen Spannelements 10 ist in einer innerhalb einer Querbohrung 15 des Grundkörpers 1 angeordneten Führungsbuchse 16 verschiebbar geführt. Das ringförmige Spannelement 10 weist an einer dem Führungszapfen 14 diametral gegenüberliegenden Seite eine nach innen vorstehende Spannklaue 17 mit einer unteren Spannfläche 18 zur Anlage an der konischen Spannfläche 7 am Spannzapfen 6 der Werkzeugaufnahme 4 auf.

Wie besonders aus Figur 1 hervorgeht, enthält der Führungszapfen 14 des ringförmigen Spannelements 10 eine mit einem Innengewinde versehene Durchgangsbohrung 19, in die ein Gewindezapfen 20 des als Stellschraube ausgebildeten Betätigungselements 12 eingreift. An dem Gewindezapfen 20 des Betätigungselements 12 ist das zweite Spannelement 11 über eine Schraube 21 so befestigt, dass sich das Betätigungselement 12 gegenüber dem Spannelement 11 drehen kann, das Spannelement 11 aber axial gesichert ist und bei einer Axialbewegung des Betätigungselements 12 durch dieses mitgenommen wird. In dem als Stellschraube mit einem Innensechskant ausgebildeten Betätigungselement 12 ist eine Stiftschraube 22 zur Sicherung der Schraube 21 angeordnet.

Gemäß Figur 2 hat das Betätigungselement 12 einen Ringbund 23, über den das Betätigungselement 12 zusammen mit dem Führungszapfen 14 des ersten Spannelements 10 verschiebbar in der Führungsbuchse 16 geführt ist. Die Führungsbuchse 16 weist an ihrem äußeren Ende eine Ringschulter 24 auf, an welcher der Ringbund 23 des Betätigungselements 12 in der Lösestellung zur Anlage gelangt.

Das zweite Spannelement 11 ist in Form eines Ringsegments ausgebildet und weist ebenfalls einen seitlich vorstehenden Führungszapfen 25 auf. Über den Führungszapfen 25 ist das Spannelement 11 in der Durchgangsbohrung 19 im Führungszapfen 14 des ersten Spannelements 10 verschiebbar geführt. Auch an dem zweiten Spannelement 11 ist eine nach innen vorstehende Spannklaue 26 mit einer in Figur 1 erkennbaren unteren Spannfläche 27 zur Anlage an der konischen Spannfläche 7 am Spannzapfen 6 der Werkzeugaufnahme 4 vorgesehen.

Wie aus den Figuren 1 und 2 ersichtlich ist, sind die beiden Spannelemente 10 und 11 derart ausgebildet, dass sie den Spannzapfen 4 der Werkzeugaufnahme 4 von beiden Seiten umschließen. Die beiden diametral gegenüberliegenden Spannklauen 17 und 26 sind als Ringsegmente mit einem Winkel von 60° ausgeführt. Dadurch ist eine gute Spann- und Einzugskraft erreichbar.

Durch Drehung des als Stellschraube ausgebildeten Betätigungselements 12 werden die Spannelemente 10 und 11 zwischen der in den Figur 1 und 2 gezeigten Lösestellung und der Spannstellung verschoben. Wird z.B. das Betätigungselement 12 in der Lösestellung von Figur 1 und 2 nach rechts gedreht, werden die beiden Spannelemente 10 und 11 über den Gewindezapfen 20 zusammengefahren und gegen den Spannzapfen 6 der Werkzeugaufnahme 4 gezogen. In der Spannstellung weisen die beiden Spannelemente 10 und 11 keine Abstützung an dem Revolverkörper 1 auf, wodurch die Entstehung von Kippmomenten vermieden werden kann. Durch entgegen gesetzte Drehung des Betätigungselements 12 können die beiden Spannelemente 10 und 11 wieder auseinander gefahren und in die Lösestellung der Figuren 1 und 2 bewegt werden.

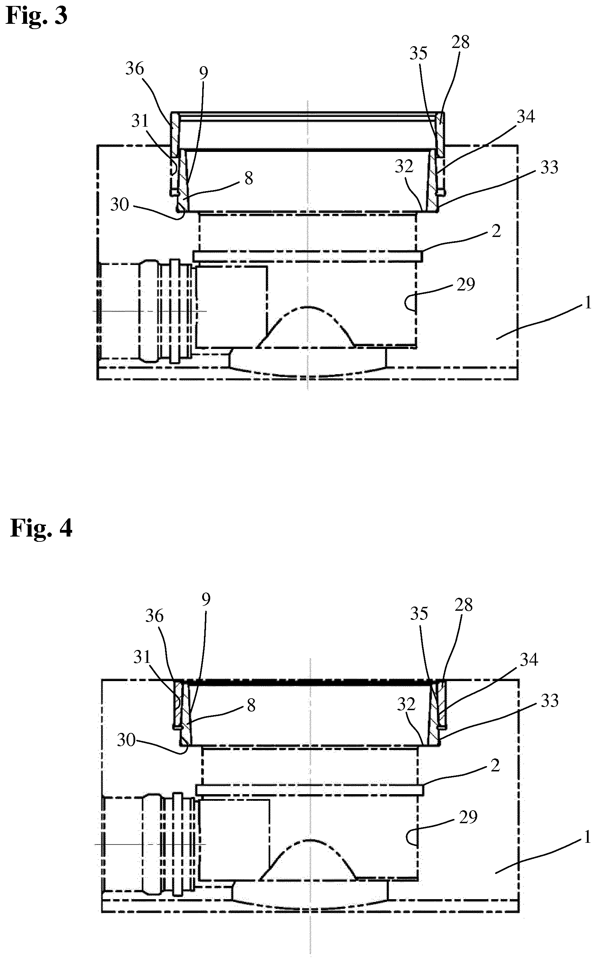

In den Figuren 3 bis 5 ist ein Grundkörper 1 eines Werkzeugträgers mit einer abgestuften Aufnahmeöffnung 2, einer in die Aufnahmeöffnung 2 eingesetzten ringförmigen Aufnahme 8 und einem Klemmring 28 zur Fixierung der ringförmigen Aufnahme 8 in der Aufnahmeöffnung 2 des Grundkörpers 1 gezeigt. Die Aufnahmeöffnung 2 weist einen unteren Bereich mit einer Innenwand 29, einen im Durchmesser erweiterten mittleren Bereich mit einer Innenwand 30 zum Einsetzen der ringförmigen Aufnahme 8 und einen im Durchmesser nochmals erweiterten oberen Bereich mit einer zylindrischen Innenwand 31 zur Aufnahme des Klemmrings 28 auf. Die ringförmige Aufnahme 8 liegt auf einem stufenförmigen Absatz 32 am Übergang von der Innenwand 29 im unteren Bereich zur Innenwand 30 im mittleren Bereich der Aufnahmeöffnung 2 auf und wird durch den in den oberen Bereich der Aufnahmeöffnung 2 eingesetzten Klemmring 28 fixiert. Die ringförmige Aufnahme 8 enthält ein kegeliges Innenpolygon als Innenkontur 9 und eine Außenkontur mit einer unteren zylindrischen Außenfläche 33 und einer oberen kegelförmigen Außenfläche 34.

Durch die als Polygon ausgebildete Innenkontur 9 der Aufnahme 8 kann eine in die Aufnahmeöffnung 2 des Grundkörpers 1 eingesetzte Werkzeugaufnahme 4 mit einer vorgegebenen Orientierung gegen Verdrehung gesichert gehalten werden. Der Klemmring 28 enthält eine kegelförmige Innenkontur 35 und einen zylindrischen Außensitz 36 zur Anlage an der zylindrischen Innenwand 31 im oberen Bereich der abgestuften Aufnahmeöffnung 2. Die kegelförmige Innenkontur 35 des Klemmrings 28 und der kegelförmige obere Teil 34 der ringförmigen Aufnahme 8 sind aufeinander abgestimmt und weisen z.B. ein Kegelverhältnis von 1:10 auf.

Wie aus Figur 3 hervorgeht, wird die ringförmige Aufnahme 8 in den mittleren Bereich 30 der Aufnahmeöffnung 2 zur Auflage auf dem ringförmigen Absatz 32 eingesetzt. Durch einen an die Innenkontur 9 der ringförmigen Aufnahme 8 angepassten Montagedorn bzw. Werkzeugmaster kann die ringförmige Aufnahme 8 mit einer gewünschten Winkelstellung bzw. Orientierung in den Grundkörper 1 eingesetzt werden. Zwischen dem zylindrischen unteren Teil 33 der ringförmigen Aufnahme 8 und dem mittleren Bereich 30 der Aufnahmeöffnung 2 ist eine Übergangspassung vorgesehen. Dann kann der Klemmring 28 auf die ringförmige Aufnahme 8 aufgesetzt und in den oberen Bereich 31 der Aufnahmeöffnung 2 eingepresst werden, wie dies in Figur 4 ersichtlich ist. Durch den Montagedorn bzw. Werkzeugmaster kann die ringförmige Aufnahme 8 dabei einen gewünschten Aufnahmedurchmesser erhalten. Der Klemmring 28 ist vorzugsweise mit einer reibungserhöhenden Beschichtung, z.B. einer Nickel-Diamant-Beschichtung, versehen. Dadurch kann eine kraftschlüssige Verbindung mit einer hohen Reibung erreicht werden.

## Patentansprüche

1. Werkzeugträger mit einem Grundkörper (1), der mindestens eine abgestufte Aufnahmeöffnung (2) für eine Werkzeugaufnahme (4), eine in der Aufnahmeöffnung (2) angeordnete ringförmige Aufnahme (8) mit einer Innenkontur (9) zur Positionierung und Drehmomentabstützung der Werkzeugaufnahme (4) und eine Spannvorrichtung (3) mit zwei durch ein gemeinsames Betätigungselement (12) quer zu einer Mittelachse (13) der Aufnahmeöffnung (2) gegeneinander verschiebbaren Spannelementen (10; 11) zum Spannen der Werkzeugaufnahme (4) enthält, **dadurch gekennzeichnet, dass** die Aufnahme (8) in der Aufnahmeöffnung (2) durch einen zur Aufnahmeöffnung (2) konzentrischen Klemmring (28) fixiert ist, der eine kegelförmige Innenkontur (35) zur Anlage an einer kegelförmigen Außenfläche (34) der Aufnahme (8) und einen zylindrischen Außensitz (36) zur Anlage an einer zylindrischen Innenwand (31) in einem oberen Bereich der abgestuften Aufnahmeöffnung (2) aufweist und zur Fixierung der Aufnahme (8) innerhalb der Aufnahmeöffnung (2) auf die ringförmige Aufnahme (8) aufgesetzt und in den oberen Bereich der Aufnahmeöffnung (2) eingepresst ist.

2. Werkzeugträger nach Anspruch 1, **dadurch gekennzeichnet, dass** die kegelförmige Innenkontur (35) des Klemmrings (28) und die kegelförmige Außenfläche (34) der Aufnahme (8) dasselbe Kegelverhältnis aufweisen.

3. Werkzeugträger nach Anspruch 1 oder 2, **dadurch gekennzeichnet, dass** der Klemmring (28) mit einer reibungserhöhenden Beschichtung versehen ist.

4. Werkzeugträger nach einem der Ansprüche 1 bis 3, **dadurch gekennzeichnet, dass** die Aufnahme (8) eine in Form eines Polygons ausgeführte Innenkontur (9) enthält.

5. Werkzeugträger nach Anspruch 4, **dadurch gekennzeichnet, dass** die Innenkontur (9) der Aufnahme (8) in Form eines kegeligen Innenpolygons ausgebildet ist.

6. Werkzeugträger nach einem der Ansprüche 1 bis 5, **dadurch gekennzeichnet, dass** die Aufnahme (8) eine zylindrische Außenfläche (33) zur Anlage an einer zylindrischen Innenwand (30) in einem mittleren Bereich der abgestuften Aufnahmeöffnung (2) enthält.

7. Werkzeugträger nach einem der Ansprüche 1 bis 6, **dadurch gekennzeichnet, dass** ein erstes Spannelement (10) in Form eines Rings und ein zweites Spannelement (11) in Form eines demgegenüber verschiebbaren Ringsegments ausgebildet ist.

8. Werkzeugträger nach einem der Ansprüche 1 bis 7, **dadurch gekennzeichnet, dass** der Grundkörper (1) ring- oder scheibenförmig ausgebildet ist und mehrere über den Umfang verteilte Aufnahmeöffnungen (2) mit darin angeordneten Aufnahmen (8) enthält.

## Claims

1. Tool carrier with a base body (1) containing at least one graduated receiving opening (2) for a tool holder (4), an annular holder (8) arranged in the receiving opening (2) and with an inner contour (9) for positioning and torque support of the tool holder (4) and a clamping device (3) with two clamping elements (10; 11), which are displaceable with respect to one another transversely to a central axis (13) of the receiving opening (2) by a common actuating element (12), for clamping the tool holder (4), **characterised in that** the holder (8) is fixed in the receiving opening (2) by a clamping ring (28) concentric to the receiving opening (2) and which has a conical inner contour (35) for resting on a conical outer surface (34) of the holder (8) and a cylindrical outer seat (36) for resting on a cylindrical inner wall (31) in an upper region of the graduated receiving opening (2) and to fix the holder (8) within the receiving opening (2) is placed on the annular holder (8) and pressed into the upper region of the receiving opening (2).

2. Tool carrier according to claim 1, **characterised in that** the conical inner contour (35) of the clamping ring (28) and the conical outer surface (34) of the holder (8) have the same taper ratio.

3. Tool carrier according to claim 1 or 2, **characterised in that** the clamping ring (28) is provided with a friction-increasing coating.

4. Tool carrier according to one of claims 1 to 3, **characterised in that** the holder (8) contains an inner contour (9) constructed in the form of a polygon.

5. Tool carrier according to claim 4, **characterised in that** the inner contour (9) of the holder (8) is designed in the form of a conical inner polygon.

6. Tool carrier according to one of claims 1 to 5, **characterised in that** the holder (8) contains a cylindrical outer surface (33) for resting on a cylindrical inner wall (30) in a central region of the graduated receiving opening (2).

7. Tool carrier according to one of claims 1 to 6, **characterised in that** a first clamping element (10) is designed in the form of a ring and a second clamping element (11) in the form of a ring segment which is displaceable with respect to it.

8. Tool carrier according to one of claims 1 to 7, **characterised in that** the base body (1) is designed like a ring or disc and contains several receiving openings (2) distributed over the circumference with holders (8) arranged therein.

## Revendications

1. Porte-outil avec un corps de base (1), qui contient au moins une ouverture de logement (2) étagée pour un logement d'outil (4), un logement (8) annulaire disposé dans l'ouverture de logement (2) avec un contour intérieur (9) pour le positionnement et le soutien de couple de rotation du logement d'outil (4) et un dispositif de mise sous tension (3) avec deux éléments de mise sous tension (10 ; 11) pouvant être coulissés l'un par rapport à l'autre par un élément d'actionnement (12) commun de manière transversale par rapport à un axe central (13) de l'ouverture de logement (2), pour la mise sous tension du logement d'outil (4), **caractérisé en ce que**
le logement (8) est bloqué dans l'ouverture de logement (2) par une bague de serrage (28) concentrique par rapport à l'ouverture de logement (2), qui présente un contour intérieur (35) conique destiné à venir en appui au niveau d'une surface extérieure (34) conique du logement (8) et un siège extérieur (36) cylindrique destiné à venir en appui au niveau d'une paroi intérieure (31) cylindrique dans une zone supérieure de l'ouverture de logement (2) étagée,
et est placé sur le logement (8) annulaire pour bloquer le logement (8) à l'intérieur de l'ouverture de logement (2) et est enfoncé dans la zone supérieure de l'ouverture de logement (2).

2. Porte-outil selon la revendication 1, **caractérisé en ce que** le contour intérieur (35) conique de la bague de serrage (28) et la surface extérieure (34) conique du logement (8) présentent le même rapport conique.

3. Porte-outil selon la revendication 1 ou 2, **caractérisé en ce que** la bague de serrage (28) est pourvue d'un revêtement augmentant le frottement.

4. Porte-outil selon l'une quelconque des revendications 1 à 3, **caractérisé en ce que** le logement (8) contient un contour intérieur (9) réalisé sous la forme d'un polygone.

5. Porte-outil selon la revendication 4, **caractérisé en ce que** le contour intérieur (9) du logement (8) est réalisé sous la forme d'un polygone intérieur conique.

6. Porte-outil selon l'une quelconque des revendications 1 à 5, **caractérisé en ce que** le logement (8) contient une surface extérieure (33) cylindrique destinée à venir en appui au niveau d'une paroi intérieure (30) cylindrique dans une zone centrale de l'ouverture de logement (2) étagée.

7. Porte-outil selon l'une quelconque des revendications 1 à 6, **caractérisé en ce qu'**un premier élément de mise sous tension (10) est réalisé sous la forme d'une bague et un deuxième élément de mise sous tension (11) est réalisé sous la forme d'un segment annulaire pouvant être coulissé au contraire.

8. Porte-outil selon l'une quelconque des revendications 1 à 7, **caractérisé en ce que** le corps de base (1) est réalisé en forme de bague ou de disque et contient plusieurs ouvertures de logement (2) réparties sur la périphérie avec des logements (8) disposés dans celles-ci.
